(19) Europäisches Patentamt
European Patent Office
Office européen des brevets

(11) **EP 4 518 207 A1**

(12) **EUROPEAN PATENT APPLICATION**

(43) Date of publication:
**05.03.2025   Bulletin 2025/10**

(21) Application number: **24183926.5**

(22) Date of filing: **24.06.2024**

(51) International Patent Classification (IPC):
**H04L 1/00** (2006.01)

(52) Cooperative Patent Classification (CPC):
**H04L 1/0003; H04L 1/0009; H04L 1/04;**
**H04L 1/0041; H04L 1/0057; H04L 1/0071**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.08.2023   US 202318458781**

(71) Applicant: **Intel Corporation**
**Santa Clara, CA 95054 (US)**

(72) Inventors:
• **STACEY, Robert**
**Portland, 97210 (US)**

• **LI, Qinghua**
**San Ramon (US)**
• **VITURI, Shlomi**
**6732925 Tel Aviv (IL)**
• **FANG, Juan**
**Portland (US)**
• **SONG, Hao**
**Santa Clara, 95054 (US)**

(74) Representative: **Viering, Jentschura & Partner**
**mbB**
**Patent- und Rechtsanwälte**
**Am Brauhaus 8**
**01099 Dresden (DE)**

(54) **APPARATUS, SYSTEM, AND METHOD OF COMMUNICATING A PHYSICAL LAYER (PHY) PROTOCOL DATA UNIT (PPDU) ACCORDING TO AN UNEQUAL MODULATION AND CODING SCHEME (MCS) (UEM) ASSIGNMENT**

(57)     For example, a transmitter may be configured to assign a stream of encoded data bits of a Physical layer (PHY) Protocol Data Unit (PPDU) to one or more sequences of encoded bit blocks for one or more spatial streams based on an Unequal Modulation and Coding Scheme (MCS) (UEM) assignment including an assignment of a plurality of MCSs to a plurality of frequency subblocks for the one or more spatial streams. For example, the transmitter may be configured to assign the one or more sequences of encoded bit blocks to the plurality of frequency sub-blocks for the one or more spatial streams.

Fig. 2

Processed by Luminess, 75001 PARIS (FR)

Description

## BACKGROUND

Devices in a wireless communication system may be configured to communicate according to communication protocols, which may utilize a Modulation and Coding Scheme (MCS).

## BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

Fig. 1 is a schematic block diagram illustration of a system, in accordance with some demonstrative aspects.

Fig. 2 is a schematic illustration of a transmitter parsing architecture, in accordance with some demonstrative aspects.

Fig. 3 is a schematic illustration of an Unequal Modulation and Coding Scheme (MCS) (UEM) parsing scheme, in accordance with some demonstrative aspects.

Fig. 4 is a schematic illustration of a UEM parsing scheme, in accordance with some demonstrative aspects.

Fig. 5 is a schematic illustration of a UEM parsing scheme, in accordance with some demonstrative aspects.

Fig. 6 is a schematic flow-chart illustration of a method of communicating a Physical layer (PHY) Protocol Data Unit (PPDU) according to a UEM assignment, in accordance with some demonstrative aspects.

Fig. 7 is a schematic illustration of a product of manufacture, in accordance with some demonstrative aspects.

## DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020*); and/or IEEE 802.11be (*IEEE P802.11be/D4.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), July 2023*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth®, Global Positioning System (GPS), Wi-Fi, Wi-Max, ZigBee™, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S 1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

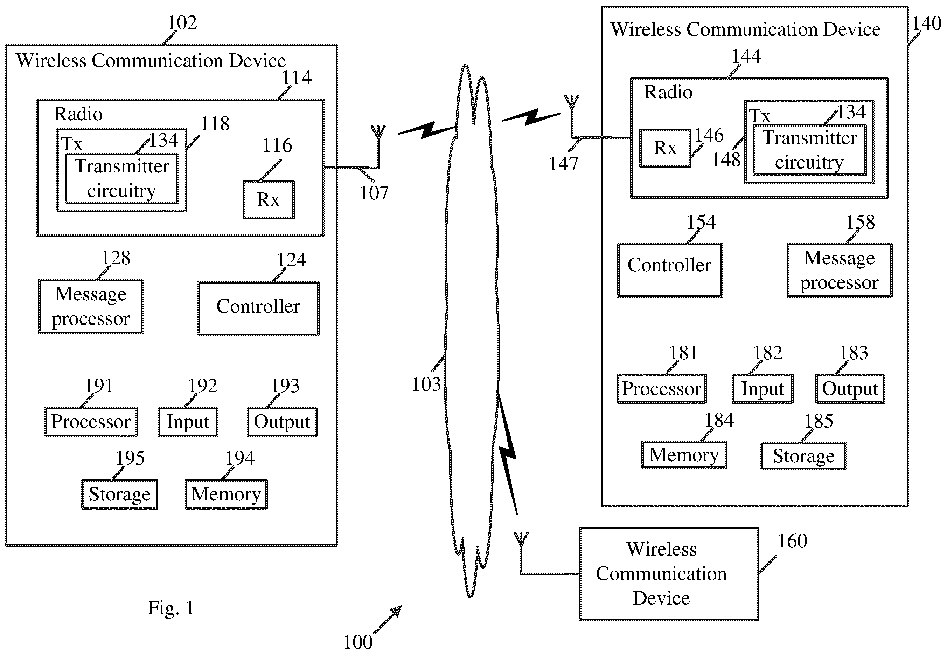

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook™ computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5Gband, an S1Gband, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11ax Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may be configured to communicate according to a resource allocation mechanism, which may assign a Resource Unit (RU) or a multiple Resource Unit (MRU) to a user (also referred to as "user STA"), e.g., as described below.

In some demonstrative aspects, device 102, device 140, and/or device 160 may be configured to communicate according to a resource allocation mechanism, which may support assignment of a RU/MRU to a user utilizing the same, e.g., equal, modulation and coding scheme (MCS), e.g., as described below.

In some demonstrative aspects, device 102, device 140, and/or device 160 may be configured to communicate according to a resource allocation mechanism, which may support assignment of a RU/MRU to a user utilizing a plurality of different, e.g., unequal, MCSs, e.g., as described below.

In some demonstrative aspects, for example, in some implementations, scenarios, use cases, and/or deployments, there may be one or more technical issues in implementations, which assign an RU or an MRU to a user utilizing the same MCS, e.g., across the entire RU/MRU assigned to the user.

For example, utilizing the same MCS for the entire assigned RU/MRU may result in low throughput, for example, when the RU assigned to the user is across a primary channel and secondary channels.

For example, utilizing the same MCS for the entire assigned RU/MRU may result in low throughput, for example, as a primary channel and a secondary channel may adopt different clear channel assessment (CCA) methods, signal detect CCA and/or energy detect CCA, which may have different sensitivities with respect to the different channels. For example, on a 20MHz primary channel and a 20MHz secondary channel, the sensitivity thresholds may be -82 decibel-milliwatts (dBm) (signal detect CCA) and/or -62dBm (energy detect CCA), respectively. For example, adopting different CCA methods for primary and secondary channels may result in significant signal-to-noise ratio (SNR) imbalance between the primary and secondary channels.

In some demonstrative aspects, device 102, device 140, and/or device 160 may be configured to implement an MCS allocation scheme (also referred to as an "unequal MCS allocation scheme"), which may be configured to assign a plurality of MCSs, e.g., including two or more different MCSs, to a plurality of different segments of an RU/MRU, e.g., as described below.

In some demonstrative aspects, the unequal MCS allocation scheme may be configured to provide a technical solution to support assignment of different MCSs to different segments of an RU/MRU, for example, when these segments have considerable variations on SNR, for example, in order to fit to their SNR conditions and/or to achieve high throughput, e.g., as described below.

In some demonstrative aspects, the unequal MCS allocation scheme may be configured to provide a technical solution to support allocation of unequal MCS over spatial streams, e.g., as described below.

For example, the unequal MCS over spatial streams may be configured to provide a technical solution to support Multiple-Input-Multiple-Output (MIMO), for example, where MIMO gains are different on different spatial streams, thereby causing various SNR conditions.

In some demonstrative aspects, the unequal MCS allocation scheme may be configured to provide a technical solution to support applying unequal MCSs in different spatial streams and/or on different frequency sub-blocks, for example, to support improved, e.g., significantly improved, throughput.

In some demonstrative aspects, device 102, device 140, and/or device 160 may be configured to communicate according to an Unequal MCS (UEM) scheme, e.g., as described below.

In some demonstrative aspects, transmitter 118 and/or transmitter 148 may include transmitter circuitry 134, which may be configured to transmit a PPDU according to the UEM scheme, e.g., as described below.

In some demonstrative aspects, transmitter circuitry 134 may be configured to transmit the PPDU according to a UEM assignment, e.g., as described below.

In some demonstrative aspects, the UEM assignment may include an assignment of a plurality of MCSs to a plurality of frequency sub-blocks for one or more spatial streams, e.g., as described below.

In some demonstrative aspects, transmitter circuitry 134 may be configured to perform stream parsing and/or segment parsing according to a UEM parsing mechanism, e.g., as described below.

In some demonstrative aspects, the UEM parsing mechanism may be configured to provide a technical solution to support stream parsing and/or segment parsing, for example, over spatial streams and/or frequency sub-blocks, e.g., as described below.

In some demonstrative aspects, transmitter circuitry 134 may be configured to implement one or more operations and/or functionalities of stream parsers and/or segment parsers, which may be configured to support unequal MCSs, for example, over spatial streams and/or frequency sub-blocks, e.g., as described below.

In some demonstrative aspects, transmitter circuitry 134 may be configured to assign a plurality of coded bits to different spatial streams, e.g., in a round robin fashion, for example, such that the coded bits are distributed among spatial streams, e.g., as described below.

For example, in case of equal MCS, a number of coded bits in each assignment of each round robin assignment round may be equal to a number of bits that may be carried by a single axis of a constellation point, for example, a real or imaginary part of a Quadrature Amplitude Modulation (QAM) signal. In one example, three bits may be assigned to each stream when 64QAM is employed by each stream.

For example, in case of equal MCS, a stream parser may assign the coded bits to each stream, for example, such that the coded bits are distributed into different 80MHz frequency sub-blocks, e.g., in a round robin way.

For example, the round robin assignment may perform interleaving, for example, by distributing coded bits into different spatial streams and/or different frequency sub-blocks.

For example, a stream parser and/or a segment parser may assign coded bits, for example, based on the number of bits on a single axis of a constellation point.

For example, in case of equal MCS, the number of bits on a single axis of a constellation point may be the same for all spatial streams and/or frequency sub-blocks.

In some demonstrative aspects, when implementing unequal MCSs, modulation orders and, accordingly, the corresponding constellation points, which are applied to different spatial streams in different frequency sub-blocks may be different.

For example, stream parsers and/or segment parsers, which are configured for equal MCS, may not be capable of properly performing stream parsing and/or segment parsing with unequal MCSs.

For example, when implementing unequal MCS, a number of bits in each assignment of coded bits may be adjusted, for example, according to the applied modulation order of the spatial stream and/or the frequency sub-block to which the assignment is made.

In some demonstrative aspects, transmitter circuitry 134 may be configured to implement a stream parser and/or a segment parser, which may be configured to assign coded bits to different spatial streams on different frequency sub-blocks, e.g., adaptively, for example, according to the selected modulation order for a spatial streams and/or a frequency sub-block, e.g., as described below.

In some demonstrative aspects, transmitter circuitry 134 may be configured to assign coded bits in stream parsers, for example, based on segment parsing parameters, e.g., as described below.

In some demonstrative aspects, transmitter circuitry 134 may implement a UEM parsing mechanism, which may be configured to support unequal MCSs and/or adaptive bit assignments, for example, according to the unequal MCSs applied in different spatial streams and/or in different frequency sub-blocks, e.g., as described below.

In some demonstrative aspects, transmitter circuitry 134 may be configured to transmit a PPDU, for example, according to an UEM assignment, which includes an assignment of a plurality of MCSs to a plurality of frequency sub-blocks for one or more spatial streams, e.g., as described below.

In some demonstrative aspects, transmitter circuitry 134 may be configured to assign a stream of encoded data bits of the PPDU to one or more sequences of encoded bit blocks for the one or more spatial streams, for example, based on the UEM assignment, e.g., as described below.

In some demonstrative aspects, a sequence of encoded bit blocks for a spatial stream may include, for example, a plurality of encoded bit blocks for one or more frequency sub-blocks for the spatial stream, e.g., as described below.

In some demonstrative aspects, a count of encoded data bits in an encoded bit block for a frequency sub-block for the spatial stream may be based, for example, on an MCS assigned to the frequency sub-block for the spatial stream according to the UEM assignment, e.g., as described below.

In some demonstrative aspects, transmitter circuitry 134 may be configured to assign the one or more sequences of encoded bit blocks to the plurality of frequency sub-blocks for the one or more spatial streams, for example, by assigning the sequence of encoded bit blocks for the spatial stream to the one or more frequency sub-blocks for the spatial stream, e.g., as described below.

In some demonstrative aspects, the frequency sub-block may include an 80 Megahertz (MHz) frequency sub-block.

In other aspects, the frequency sub-block may have any other frequency bandwidth.

In some demonstrative aspects, the UEM assignment may include a first MCS assigned to a first frequency sub-block/spatial stream combination, e.g., as described below.

In some demonstrative aspects, the UEM assignment may include a second MCS, different from the first MCS, assigned to a second frequency sub-block/spatial stream combination, e.g., as described below.

In some demonstrative aspects, transmitter circuitry 134 may include a stream parser, which may be configured to assign the stream of encoded data bits to the one or more sequences of encoded bit blocks for the one or more spatial streams, for example, based on the UEM assignment, e.g., as described below.

In some demonstrative aspects, transmitter circuitry 134 may include a segment parser to assign the one or more sequences of encoded bit blocks to the plurality of frequency sub-blocks for the one or more spatial streams, e.g., as described below.

In some demonstrative aspects, transmitter circuitry 134 may be configured to assign the stream of encoded data bits to the one or more sequences of encoded bit blocks, for example, according to a round-robin assignment, e.g., as described below.

In other aspects, transmitter circuitry 134 may assign the stream of encoded data bits to the one or more sequences of encoded bit blocks according to any other assignment mechanism.

In some demonstrative aspects, transmitter circuitry 134 may be configured to assign the sequence of encoded bit blocks for the spatial stream to the one or more frequency sub-blocks for the spatial stream, for example, according to the round-robin assignment, e.g., as described below.

In other aspects, transmitter circuitry 134 may assign the sequence of encoded bit blocks for the spatial stream to the one or more frequency sub-blocks for the spatial stream according to any other assignment mechanism.

In some demonstrative aspects, transmitter circuitry 134 may be configured to assign a first count of encoded data bits to a first encoded bit block for a first frequency sub-block, e.g., as described below.

In some demonstrative aspects, transmitter circuitry 134 may be configured to assign a second count of encoded data bits to a second encoded bit block for a second frequency sub-block, e.g., as described below.

In some demonstrative aspects, the first count of encoded data bits may be based on a first MCS assigned to the first frequency sub-block, e.g., as described below.

In some demonstrative aspects, the second count of encoded data bits may be based on a second MCS assigned to the second frequency sub-block, e.g., as described below.

In some demonstrative aspects, the first count of encoded data bits may be different from the second count of encoded data bits, e.g., as described below.

In some demonstrative aspects, the first MCS may be different from the second MCS, e.g., as described below.

In some demonstrative aspects, the first encoded bit block and the second encoded bit block may be assigned for a same spatial stream.

In other aspects, the first encoded bit block and the second encoded bit block may be assigned for different spatial streams.

For example, the first encoded bit block may be assigned for a first spatial stream, and the second encoded bit block may be assigned for a second spatial stream.

In some demonstrative aspects, the count of encoded data bits in the encoded bit block for the frequency sub-block for the spatial stream may be based, for example, on a modulation order of the MCS assigned to the frequency sub-block for the spatial stream, e.g., as described below.

In some demonstrative aspects, the count of encoded data bits in the encoded bit block for the frequency sub-block for the spatial stream may be based, for example, on a modulation-based parameter, e.g., as follows:

$$s_{ln} = \max\left(1, \frac{log_2(M_{ln})}{2}\right), \qquad (1)$$

wherein $s_{ln}$ denotes the modulation-based parameter for an *l-th* frequency sub-block for an *n-th* spatial stream,

wherein $M_{ln}$ denotes a modulation order of the MCS assigned to the *l-th* frequency sub-block for the *n-th* spatial stream,

wherein $l = 0,1, \cdots \cdots L - 1$, and $n = 0,1, \cdots \cdots N_{SS} - 1$,

wherein $L$ denotes a count of frequency sub-blocks in the plurality of frequency sub-blocks,

wherein *Nss* denotes a count of spatial streams in the one or more spatial streams.

In some demonstrative aspects, the count of encoded data bits in the encoded bit block for the frequency sub-block for the spatial stream may be determined, e.g., as follows:

$$m_{ln} = A_{ln} \cdot s_{ln}, \qquad\qquad (2)$$

wherein $m_{ln}$ denotes the count of encoded data bits in the encoded bit block for the *l-th* frequency sub-block for the *n-th* spatial stream,
and wherein $A_{ln}$ denotes a parameter based on a count of allocated subcarriers in the *l-th* frequency sub-block for the *n-th* spatial stream.

In some demonstrative aspects, the parameter $A_{ln}$ may include a positive integer, which may be based, for example, on a ratio between the count of allocated subcarriers in the *l-th* frequency sub-block for the *n-th* spatial stream, and a minimal count of allocated subcarriers per frequency sub-block for the *n-th* spatial stream, e.g., as described below.

In some demonstrative aspects, transmitter circuitry 134 may be configured to assign the stream of encoded data bits to the one or more sequences of encoded bit blocks, for example, according to a sequence of bit assignments on a frequency sub-block basis, e.g., as described below.

In some demonstrative aspects, a bit assignment corresponding to a frequency sub-block may include, for example, one or more bit assignment rounds to assign encoded bit blocks for the frequency sub-block, for example, for all of the one or more spatial streams, e.g., as described below.

In some demonstrative aspects, transmitter circuitry 134 may be configured to assign the stream of encoded data bits to the one or more sequences of encoded bit blocks, for example, according to a sequence of *L* bit assignments, e.g., as described below.

In some demonstrative aspects, an *l-th* bit assignment may include, for example, a sequence of *Nss* bit assignment rounds, e.g., as described below.

In some demonstrative aspects, an *n-th* bit assignment round for an *l-th* bit assignment may include, for example, an assignment of $m_{ln}$ encoded data bits to an encoded bit block for the *l-th* frequency sub-block for the *n-th* spatial stream, e.g., as described below.

In some demonstrative aspects, the count of encoded data bits $m_{ln}$ may be based, for example, on an MCS assigned to the *l-th* frequency sub-block for the *n-th* spatial stream, e.g., as described below.

In some demonstrative aspects, transmitter circuitry 134 may be configured to assign the stream of encoded data bits to the one or more sequences of encoded bit blocks, for example, according to a sequence of bit assignment rounds on a spatial stream basis, e.g., as described below.

In some demonstrative aspects, a bit assignment round corresponding to a spatial stream may include, for example, an assignment of encoded data bits for encoded bit blocks for all frequency sub-blocks for the spatial stream, e.g., as described below.

In some demonstrative aspects, transmitter circuitry 134 may be configured to assign the stream of encoded data bits to the one or more sequences of encoded bit blocks, for example, according to a sequence of *Nss* bit assignment rounds, e.g., as described below.

In some demonstrative aspects, an *n-th* bit assignment round may include, for example, an assignment of $\sum_{l=0}^{L} m_{ln}$ encoded data bits for the *n-th* spatial stream, e.g., as described below.

In some demonstrative aspects, the count of encoded data bits $m_{ln}$ may be based, for example, on an MCS assigned to an *l-th* frequency sub-block for an *n-th* spatial stream, e.g., as described below.

In some demonstrative aspects, transmitter circuitry 134 may be configured to assign the stream of encoded data bits to the one or more sequences of encoded bit blocks, for example, according to a joint segment-stream parsing scheme, for example, by assigning the stream of encoded data bits to a stream of a plurality of stream-frequency segments, e.g., as described below.

In some demonstrative aspects, the plurality of stream-frequency segments may correspond to a respective plurality of different frequency sub-block/spatial stream combinations, e.g., as described below.

In some demonstrative aspects, transmitter circuitry 134 may be configured to assign the stream of encoded data bits to the one or more sequences of encoded bit blocks, for example, by assigning the stream of encoded data bits to a stream of $L \times N_{SS}$ stream-frequency segments, for example, in a respective sequence of $L \times N_{SS}$ bit assignment rounds, e.g., as described below.

In some demonstrative aspects, an $n \times l$ *- th* bit assignment round of the $L \times N_{SS}$ bit assignment rounds may include an assignment of $m_{ln}$ encoded data bits, e.g., as described below.

In some demonstrative aspects, the count of encoded data bits $m_{ln}$ may be based, for example, on an MCS assigned to an *l-th* frequency sub-block for an *n-th* spatial stream, e.g., as described below.

In some demonstrative aspects, transmitter circuitry 134 may be configured to generate an interleaved stream of encoded data bits, for example, by interleaving the stream of encoded data bits, e.g., as described below.

In some demonstrative aspects, transmitter circuitry 134 may be configured to interleave the stream of encoded data bits, for example, based on a count of frequency sub-blocks in the plurality of frequency sub-blocks, e.g., as described below.

In some demonstrative aspects, transmitter circuitry 134 may be configured to interleave the stream of encoded data bits, for example, based on a count of spatial streams in the one or more spatial streams, e.g., as described below.

In some demonstrative aspects, transmitter circuitry 134 may be configured to assign the interleaved stream of encoded data bits to the one or more sequences of encoded bit blocks for the one or more spatial streams, for example, based on the UEM assignment, e.g., as described below.

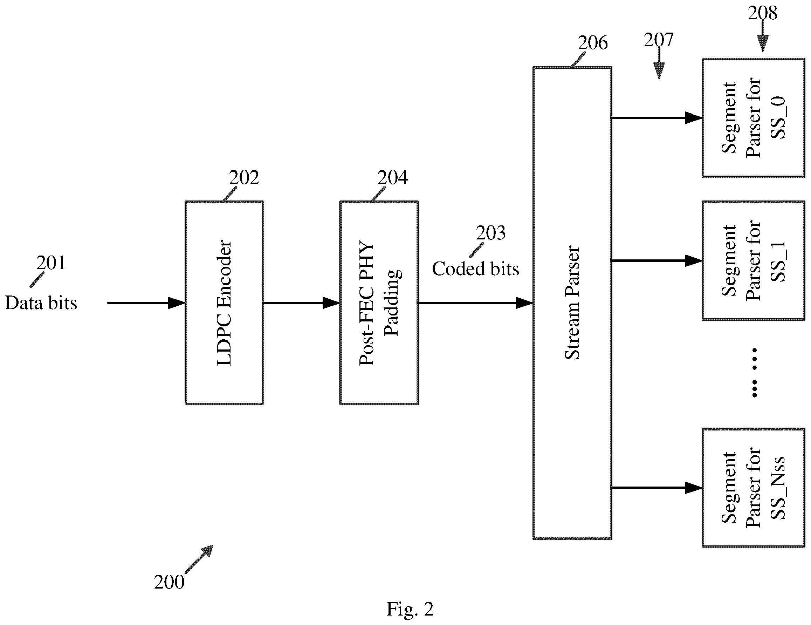

Reference is made to Fig. 2, which schematically illustrates a transmitter parsing architecture 200, in accordance with some demonstrative aspects.

For example, transmitter circuitry 134 (Fig. 1) may include perform one or more operations and/or functionalities of transmitter parsing architecture 200, and/or include one or more elements of one or more elements of transmitter parsing architecture 200.

In some demonstrative aspects, as shown in Fig. 2, transmitter parsing architecture 200 may include a stream parser 206, which may be configured to assign a stream of coded bits 203 to one or more sequences of encoded bit blocks for one or more spatial streams 207, e.g., as described below.

In some demonstrative aspects, as shown in Fig. 2, the stream of coded bits 203 may be generated by encoding a plurality of data bits 201, e.g., using a low-density parity-check (LDPC) encoder 202, which may be followed by a Post Forward Error Correction (FEC) PHY Padding encoder 204. In other aspects, the stream of coded bits 203 may be generated according to any other suitable encoding mechanism.

In some demonstrative aspects, as shown in Fig. 2, transmitter parsing architecture 200 may include a segment parser 208, which may be configured to assign the one or more sequences of encoded bit blocks to a plurality of frequency sub-blocks for the one or more spatial streams, for example, by assigning a sequence of encoded bit blocks for a spatial stream to one or more frequency sub-blocks for the spatial stream, e.g., as described below.

In some demonstrative aspects, the one or more frequency sub-blocks blocks for the spatial stream may include 80MHz frequency sub-blocks. In other aspects, the one or more frequency sub-blocks blocks for the spatial stream may have any other suitable frequency sub-block bandwidth.

Referring back to Fig. 1, in some demonstrative aspects, transmitter circuitry 134 may be configured to implement a UEM parsing mechanism to support assignment of a plurality of coded bits to different spatial streams, for example, according to MCS selections of different spatial streams on different frequency sub-blocks, for example, different 80MHz frequency sub-blocks, e.g., as described below.

In some demonstrative aspects, transmitter circuitry 134 may include a stream parser, e.g., stream parser 206 (Fig. 2), which may be configured to assign the coded bits to one or more spatial streams, for example, based on an assignment of a plurality of unequal MCSs to a plurality of frequency sub-blocks for the one or more spatial streams, e.g., as described below. For example, the stream parser may be configured to assign the coded bits to the one or more spatial streams according to segment parser parameters for the plurality of unequal MCSs, e.g., as described below.

In some demonstrative aspects, for example, in some use cases and/or scenarios, an unequal MCS user's resource unit (RU) or multiple resource unit (MRU) may be across $L$ 80MHz frequency sub-blocks, wherein $l = 0,1, \cdots \cdots L - 1$, and the number of spatial streams may be $N_{SS}$, wherein $n = 0,1 \cdots \cdots N_{SS} - 1$. According to this example, the unequal MCS user may have up to $L \times N_{SS}$ MCSs for a spatial stream, e.g., for each spatial stream, in a frequency sub-block, e.g., in each frequency sub-block.

In some demonstrative aspects, a bit assignment unit $s_{ln}$ of an *n-th* spatial stream on an *l-th* 80MHz frequency subblock in stream parsing may be determined, e.g., as follows:

$$s_{ln} = \max \left(1, \frac{log_2(M_{ln})}{2}\right) \qquad (3)$$

wherein $l = 0,1, \cdots \cdots L - 1$, $n = 0,1, \cdots \cdots N_{SS} - 1$,
wherein $M_{ln}$ denotes an $M_{ln}$ - *QAM* adopted as the modulation order of spatial stream $n$ in frequency sub-block $l$.

For example, one or more segment parser parameters for unequal MCSs for two spatial streams, e.g., $N_{SS} = 2$, may be defined, e.g., as follows:

Table 1

| RU or MRU | RU order (low to high frequency) | L | $m_{00}$ | $m_{01}$ | $m_{10}$ | $m_{11}$ | $m_{20}$ | $m_{21}$ | $m_{30}$ | $m_{31}$ |
|---|---|---|---|---|---|---|---|---|---|---|
| 996+ 484 | 484+996 | 2 | $s_{00}$ | $s_{01}$ | $2s_{10}$ | $2s_{11}$ | | | | |
| | 996+484 | | $2s_{00}$ | $2s_{01}$ | $s_{10}$ | $s_{11}$ | | | | |
| 996+ 484+ 242 | (242+484)+ 996 | | $3s_{00}$ | $3s_{01}$ | $4s_{10}$ | $4s_{11}$ | | | | |
| | 996+(242+ 484) | | $4s_{00}$ | $4s_{01}$ | $3s_{10}$ | $3s_{11}$ | | | | |
| 2×996 +484 | 484+996+ 996 | 3 | $s_{00}$ | $s_{01}$ | $2s_{10}$ | $2s_{11}$ | $2s_{20}$ | $2s_{21}$ | | |
| | 996+484+ 996 | | $2s_{00}$ | $2s_{01}$ | $s_{10}$ | $s_{11}$ | $2s_{20}$ | $2s_{21}$ | | |
| | 996+996+ 484 | | $2s_{00}$ | $2s_{01}$ | $2s_{10}$ | $2s_{11}$ | $s_{20}$ | $s_{21}$ | | |
| 3×996 +484 | 484+996+ 996+996 | 4 | $s_{00}$ | $s_{01}$ | $2s_{10}$ | $2s_{11}$ | $2s_{20}$ | $2s_{21}$ | $2s_{30}$ | $2s_{31}$ |
| | 996+484+ 996+996 | | $2s_{00}$ | $2s_{01}$ | $s_{10}$ | $s_{11}$ | $2s_{20}$ | $2s_{21}$ | $2s_{30}$ | $2s_{31}$ |
| | 996+996+ 484+996 | | $2s_{00}$ | $2s_{01}$ | $2s_{10}$ | $2s_{11}$ | $S20$ | $s_{21}$ | $2s_{30}$ | $2s_{31}$ |
| | 996+996+ 996+484 | | $2s_{00}$ | $2s_{01}$ | $2s_{10}$ | $2s_{11}$ | $2s_{20}$ | $2s_{21}$ | $s_{30}$ | $s_{31}$ |
| 2×996 | 996+996 | 2 | $s_{00}$ | $s_{01}$ | $s_{10}$ | $s_{11}$ | | | | |
| 3×996 | 996+996+ 996 | 3 | $s_{00}$ | $s_{01}$ | $s_{10}$ | $s_{11}$ | $s_{20}$ | $s_{21}$ | | |
| 4×996 | 996+996+ 996+996 | 4 | $s_{00}$ | $s_{01}$ | $s_{10}$ | $s_{11}$ | $s_{20}$ | $s_{21}$ | $s_{30}$ | $s_{31}$ |

For example, the parameter $m_{ln}$ in Table 1 may represent a number of bits assigned to spatial stream $n$ on frequency sub-block $l$,e.g., in each bit assignment round.

In some demonstrative aspects, transmitter circuitry 134 may include the stream parser, e.g., stream parser 206 (Fig. 2), which may be configured to assign a stream of coded bits, e.g., coded bits 203 (Fig. 2).

In some demonstrative aspects, the number $m_{ln}$ of bits assigned to spatial stream $n$ in frequency subblock $l$, e.g., in each bit assignment round, may be determined, for example, as a multiple of $s_{ln}$, e.g., as follows:

$$m_{ln} = A_{ln} \cdot s_{ln}, \tag{4}$$

wherein $A_{ln}$ denotes a positive integer.

For example, values of $A_{ln}$ may be proportional, e.g., approximately proportional, to a number of allocated sub-carriers in the 80MHz frequency sub-block $l$.

For example, if the number of allocated sub-carriers in two 80MHz frequency sub-blocks are 996 and 484, respectively, then $A_{00} = A_{01} = \cdots \cdots A_{0(NSS-1)} = 2$ and $A_{10} = A_{11} = \cdots \cdots A_{1(NSS-1)} = 1$. According to this example, in frequency sub-block 0, $m_{00} = 2 \cdot s_{00}, m_{01} = 2 \cdot s_{01}, \cdots \cdots, m_{0(NSS-1)} = 2 \cdot s_{0(NSS-1)}$, while in frequency subblock 1, $m_{10} = 2 \cdot s_{10}, m_{11} = 2 \cdot s_{11}, \cdots \cdots, m_{1(NSS-1)} = 2 \cdot s_{1(NSS-1)}$.

In some demonstrative aspects, transmitter circuitry 134 may include a stream parser, e.g., stream parser 206 (Fig. 2), which may be configured to determine the values of $A_{ln}$ and/or $m_{ln}$, for example, based on information of segment parser parameters, e.g., according to Table 1.

In some demonstrative aspects, transmitter circuitry 134 may include a stream parser, e.g., stream parser 206 (Fig. 2), which may be configured to assign coded bits to different spatial streams in a round robin fashion. For example, in each bit assignment round, the number of assigned bits may be different.

In some demonstrative aspects, transmitter circuitry 134 may be configured implement a UEM parsing mechanism to support stream parsing and/or segment parsing, for example, based on the parameter $m_{ln}$, which represents the number of bits assigned to spatial stream $n$ on frequency sub-block $l$ in each bit assignment round, wherein $l = 0,1, \cdots \cdots L - 1$, $n = 0,1, \cdots \cdots N_{SS} - 1$, e.g., as described below.

In some demonstrative aspects, transmitter circuitry 134 may be configured to assign a stream of coded data bits to one or more sequences of encoded bit blocks, for example, according to a sequence of bit assignments on a frequency sub-block basis, e.g., as described below.

In some demonstrative aspects, a bit assignment corresponding to a frequency sub-block may include one or more bit assignment rounds to assign encoded bit blocks for the frequency sub-block for one or more, e.g., all, spatial streams, e.g., as described below.

For example, it may be defined that the number of assigned bits in each bit assignment round is in the order of $m_{l0}$, $m_{l1}, \cdots m_{l(NSS-1)}$, $l = 0,1, \cdots \cdots L - 1$, wherein in a bit assignment round, $m_{ln}$ bits are assigned to spatial stream $n$, $n = 0,1, \cdots$

$\cdots N_{SS}$ - 1. For example, the stream of coded bits may be assigned to spatial stream $n$, $n$ = 0,1, $\cdots \cdots N_{SS}$ - 1, in turn, e.g., in a "round robin fashion", for example, while different amounts of bits, e.g., $m_{ln}$ bits, may be assigned, e.g., in each bit assignment round.

For example, it may be defined that the stream of coded bits is to be assigned, e.g., periodically assigned, to different spatial streams, for example, in the order of $m_{l0}$, $m_{l1}$, $\cdots m_{l(NSS-1)}$, wherein $l$ = 0,1, $\cdots \cdots L$ - 1, for example, until all coded bits have been assigned.

In some demonstrative aspects, the transmitter circuitry 134 may be configured to assign a stream of encoded data bits to one or more sequences of encoded bit blocks, for example, according to a sequence of bit assignment rounds on a spatial stream basis, e.g., as described below.

In some demonstrative aspects, a bit assignment round corresponding to a spatial stream may include an assignment of encoded data bits, for example, for encoded bit blocks for all frequency sub-blocks for the spatial stream, e.g., as described below.

For example, it may be defined that a number of assigned bits in each bit assignment round is in the order of:

$$\sum_{l=0}^{L} m_{ln}, \tag{5}$$

wherein $n$ = 0,1, $\cdots \cdots N_{SS}$ - 1.

For example, it may be defined that in a bit assignment round $\sum_{l=0}^{L} m_{ln}$ bits may be assigned to spatial stream $n$, wherein $n$ = 0,1, $\cdots \cdots N_{SS}$ - 1. According to this definition, each spatial stream may be assigned with coded bits in turn, e.g., in a round robin fashion, for example, while different amounts of bits, e.g., $\sum_{l=0}^{L} m_{ln}$ bits, are assigned in each bit assignment.

For example, it may be defined that the stream of coded bits is to be assigned, e.g., periodically assigned, to different spatial streams, e.g., in the order of $\sum_{l=0}^{L} m_{ln}$, $n$ = 0,1, $\cdots \cdots N_{SS}$ - 1, for example, until all coded bits have been assigned.

In some demonstrative aspects, the transmitter circuitry 134 may be configured to assign a stream of encoded data bits to one or more sequences of encoded bit blocks, for example, according to a joint segment-stream parsing scheme, for example, by assigning the stream of encoded data bits to a stream of a plurality of stream-frequency segments, e.g., as described below.

In some demonstrative aspects, the plurality of stream-frequency segments may correspond to a respective plurality of different frequency sub-block/spatial stream combinations, e.g., as described below.

For example, it may be defined that different spatial streams are to treated the same way as frequency segments and/or frequency sub-blocks, for example, where different 80 MHz segments and/or frequency sub-blocks have different numbers of allocated subcarriers.

For example, a virtual segment and/or sub-block (or a "virtual stream") may be defined for a frequency sub-block, e.g., for each frequency sub-block, in a spatial stream, e.g., in each spatial stream.

For example, it may be defined that a virtual sub-block, e.g., each virtual sub-block, is to be associated with a bit assignment unit $m_{ln}$.

For example, transmitter circuitry 134 may implement a joint stream and segment parser, which may be configured assign bits to a single stream, e.g., with $L \times N_{SS}$ segments.

For example, it may be defined that some virtual segment and/or frequency sub-block may be filled up before the others. For example, when a virtual segment is filled up, this virtual segment and its $m_{ln}$ may be removed from the rest of the bit assignment, and the bit assignment may continue.

For example, a number of virtual segments may be decreased by one, for example, after one virtual segment is filled up.

For example, it may be defined that adjacent virtual segments and/or virtual sub-blocks (or "virtual streams") are associated with different actual spatial streams, e.g., instead of different actual frequency segments and/or frequency sub-blocks, for example, in order to improve, e.g., maximize, a diversity gain.

In some demonstrative aspects, transmitter circuitry 134 may implement an UEM parsing mechanism, which may be configured to support assigning of adjacent coded bits to a same spatial stream, e.g., as described above.

For example, it may be defined that adjacent coded bits of $\sum_{l=0}^{L} m_{ln}$ are to be assigned to the same spatial stream, e.g., as described above.

For example, a spatial diversity gain may be improved, for example, by configuring a stream parser to first assign a stream of coded bits to all of the streams of one segment, and may then move to the next segment.

For example, starting from $l$ = 0, bits may be assigned in units of $m_{00}$, $m_{01}$, $\cdots$ $m_{0(NSS-1)}$, to the $N_{SS}$ streams, respectively.

For example, after a first segment is filled up, the assignment of coded bits may move to a second segment, e.g., with $m_{10}$, $m_{11}$, $\cdots$ $m_{1(NSS-1)}$, and so on so fourth.

For example, after all segments are filled up, the segment parser may re-parse the assigned bits in each stream, for example, such that bits within short distances are spread relatively far apart.

In some demonstrative aspects, the transmitter circuitry 134 may be configured to generate an interleaved stream of encoded data bits, for example, by interleaving a stream of encoded data bits, for example, based on a count of frequency sub-blocks in the plurality of frequency sub-blocks, and/or a count of spatial streams in the one or more spatial streams, e.g., as described below.

In some demonstrative aspects, the transmitter circuitry 134 may be configured to assign the interleaved stream of encoded data bits to one or more sequences of encoded bit blocks for the one or more spatial streams, for example, based on an assignment of a plurality of MCSs to the plurality of frequency sub-blocks for the one or more spatial streams, e.g., as described below.

For example, transmitter circuitry 134 may be configured to generate a plurality of interleaved bits, for example, by interleaving the stream of coded bits, e.g., using a block interleaver.

For example, transmitter circuitry 134 may be configured to assign the interleaved bits to fill in, e.g., to sequentially fill in, the spatial streams and/or segments.

For example, this interleaving mechanism may provide a technical solution to reduce an implementation complexity, for example, compared to a two-step interleaving mechanism using interleaving with stream and segment parsers, respectively.

In one example, it may be defined that, e.g., for a space first filling, the interleaved bits may first fill the spatial streams, e.g., in a round robin fashion of a subcarrier, e.g., in the units of $m_{l0}$, $m_{l1}$, $\cdots$ $m_{l(NSS-1)}$, $l$ = 0,1, $\cdots$ $\cdots$ $L$ - 1, respectively; and then move to the next subcarrier.

In another example, it may be defined that, e.g., for a frequency first filling, the interleaved bits may first fill the subcarriers of a spatial stream, e.g., in the units of $m_{l0}$, $m_{l1}$, $\cdots$ $m_{l(NSS-1)}$, $l$ = 0,1, $\cdots$ $\cdots$ $L$ - 1, for different segments, respectively, and then move to the next spatial stream.

In some demonstrative aspects, transmitter circuitry 134 may implement an UEM parsing mechanism configured to support stream parsing followed by segment parsing, which may be conducted for the stream of coded bits of each spatial stream separately, e.g., as described below.

For example, transmitter circuitry 134 may be configured to assign coded bits of spatial stream $n$, where $n$ = 0,1, $\cdots$ $\cdots$ $N_{SS}$ - 1, to different 80MHz frequency sub-blocks, e.g., in a round robin fashion.

For example, a number of bits in each bit assignment round may follow the order of $m_{0n}$, $m_{1n}$, $\cdots$ $m_{Ln}$, e.g., wherein $m_{ln}$ bits may be assigned to frequency subblock $l$, wherein $l$ = 0,1, $\cdots$ $\cdots$ $L$ - 1.

For example, transmitter circuitry 134 may assign, e.g., periodically assign, coded bits of spatial stream $n$ to different frequency sub-blocks in the order of $m_{0n}$, $m_{1n}$, $\cdots$ $m_{Ln}$, for example, until finishing assigning all the coded bits.

For example, if some frequency segment and/or frequency sub-block is filled up, transmitter circuitry 134 may be configured to remove this frequency segment and/or frequency sub-block and its associated bit assignment unit from the rest of the bit assignments.

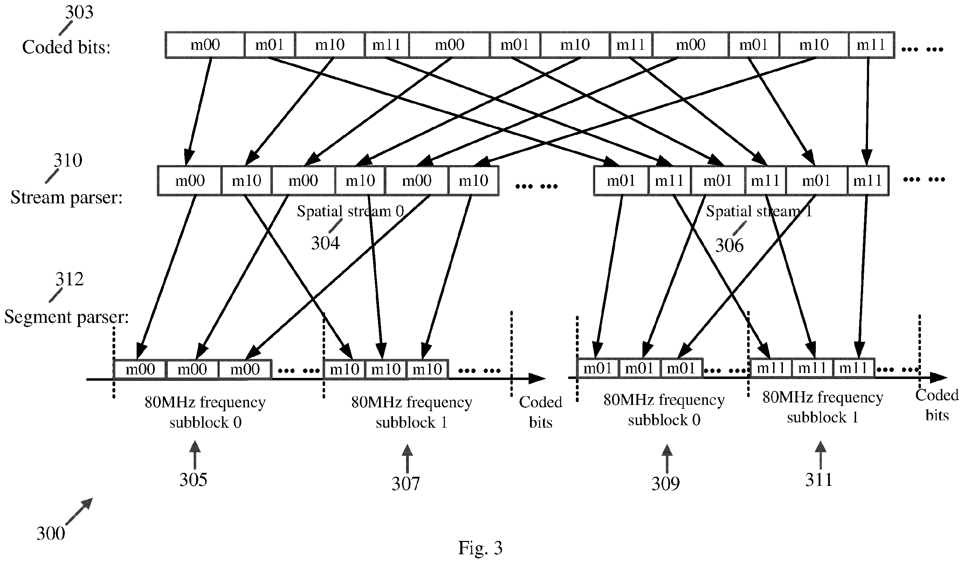

Reference is made to Fig. 3, which schematically illustrates a UEM parsing scheme 300, in accordance with some demonstrative aspects.

For example, UEM parsing scheme 300 may be configured to support stream parsing and/or segment parsing, for example, according to a UEM assignment, which includes an assignment of a plurality of MCSs to a plurality of frequency sub-blocks for one or more spatial streams. For example, transmitter circuitry 134 (Fig. 1) may be configured to parse a stream of encoded data bits based on one or more operations of UEM parsing scheme 300.

In some demonstrative aspects, UEM parsing scheme 300 may be implemented, e.g., by transmitter circuitry 134 (Fig. 1), to assign a stream of encoded data bits 303 to one or more sequences of encoded bit blocks for one or more spatial streams, for example, according to a sequence of bit assignments on a frequency sub-block basis, e.g., as described below.

In some demonstrative aspects, as shown in Fig. 3, UEM parsing scheme 300 may utilize a stream parser 310, which may be configured to assign the stream of encoded data bits 303 to a first sequence of encoded bit blocks for a first spatial stream 304 (spatial stream 0), and to a second sequences of encoded bit blocks for a second spatial stream 306 (spatial steam 1), for example, in a round robin fashion.

For example, stream parser 206 (Fig. 2) may include, operate as, perform a role of, and/or perform the functionality of, stream parser 310.

In some demonstrative aspects, as shown in Fig. 3, UEM parsing scheme 300 may utilize at least one segment parser 312, which may be configured to assign the first and second sequences of encoded bit blocks to two frequency sub-blocks, e.g., including a first frequency sub-block, e.g., a first 80MHz frequency sub-block (frequency sub-block 0) and a second frequency sub-block, e.g., a second 80MHz frequency sub-block (frequency sub-block 1), for the first and second spatial streams.

For example, segment parser 208 (Fig. 2) may include, operate as, perform a role of, and/or perform the functionality of, segment parser 312.

In some demonstrative aspects, as shown in Fig. 3, a number of assigned coded bits, e.g., in each bit assignment round, may be in the order of $m_{00}$, $m_{01}$, $m_{10}$, and $m_{11}$. For example, values of $m_{00}$, $m_{01}$, $m_{10}$, and $m_{11}$ may be obtained, for example, according to segment parser parameters, e.g., as according to Table 1, which may be determined by unequal MCSs adopted by different spatial streams on different 80MHz frequency sub-blocks and the number of subcarriers in each frequency sub-block.

For example, as shown in Fig. 3, stream parser 310 may assign the bits of encoded data bits 303, e.g., in a round robin fashion or according to any other assignment scheme.

For example, as shown in Fig. 3, in bit assignment rounds with $m_{00}$ bits and $m_{10}$ bits, stream parser 310 may assign coded bits to spatial stream 304 (spatial stream 0).

For example, as shown in Fig. 3, in bit assignment rounds with $m_{01}$ bits and $m_{11}$ bits, stream parser 310 may assign coded bits to spatial stream 306 (spatial stream 1)

For example, stream parser 310 may keep assigning coded bits 303 to spatial stream 304 and spatial stream 306, e.g., in a round robin fashion, for example, until all coded bits 303 have been assigned.

In some demonstrative aspects, segment parser 312 may perform parsing for coded bits assigned to the spatial streams, e.g., individually for coded bits assigned to each spatial stream.

In some demonstrative aspects, as shown in Fig. 3, segment parser 312 may assign coded bits of spatial stream $n$, wherein $n = 0,1$, to frequency sub-block 0 and frequency sub-block 1, e.g., in a round robin fashion, and/or in any other way.

For example, a number of bits assigned to the frequency sub-block 0 may be $m_{0n}$, and a number of bits assigned to the frequency sub-block 1 may be $m_{1n}$.

For example, segment parser 312 may keep assigning coded bits of spatial stream $n$ to the frequency sub-block 0 and to the frequency sub-block 1, e.g., in a round robin fashion, for example, until finishing bits assignments for all the coded bits.

For example, as shown in Fig. 3, segment parser 312 may assign $m_{00}$ coded bits of spatial stream 304 to a frequency sub-block 305 for spatial stream 304 (80MHz frequency sub-block 0 of spatial stream 0).

For example, as shown in Fig. 3, segment parser 312 may assign $m_{10}$ coded bits of spatial stream 304 to a frequency sub-block 307 for spatial stream 304 (80MHz frequency sub-block 1 of spatial stream 0).

For example, as shown in Fig. 3, segment parser 312 may assign $m_{01}$ coded bits of spatial stream 306 to a frequency sub-block 309 for spatial stream 306 (80MHz frequency sub-block 0 of spatial stream 1).

For example, as shown in Fig. 3, segment parser 312 may assign $m_{11}$ coded bits of spatial stream 306 to a frequency sub-block 311 for spatial stream 306 (80MHz frequency sub-block 0 of spatial stream 1).

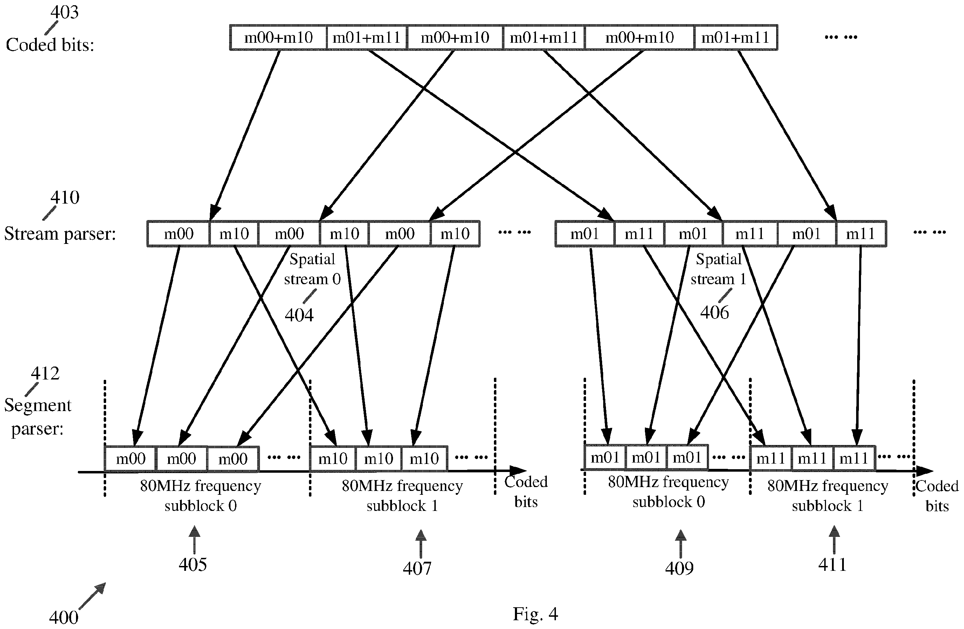

Reference is made to Fig. 4, which schematically illustrates a UEM parsing scheme 400, in accordance with some demonstrative aspects.

For example, UEM parsing scheme 400 may be configured to support stream parsing and/or segment parsing, for example, according to a UEM assignment, which includes an assignment of a plurality of MCSs to a plurality of frequency sub-blocks for one or more spatial streams. For example, transmitter circuitry 134 (Fig. 1) may be configured to parse a stream of encoded data bits based on one or more operations of UEM parsing scheme 400.

In some demonstrative aspects, UEM parsing scheme 400 may be implemented, e.g., by transmitter circuitry 134 (Fig. 1), to assign a stream of encoded data bits 403 to one or more sequences of encoded bit blocks for one or more spatial streams, for example, according to a sequence of bit assignment rounds on a spatial stream basis, e.g., as described below.

In some demonstrative aspects, as shown in Fig. 4, UEM parsing scheme 400 may utilize a stream parser 410, which may be configured to assign the stream of encoded data bits 403 to a first sequence of encoded bit blocks for a first spatial stream 404 (spatial stream 0), and to a second sequences of encoded bit blocks for a second spatial stream 406 (spatial steam 1), for example, in a round robin fashion.

For example, stream parser 206 (Fig. 2) may include, operate as, perform a role of, and/or perform the functionality of, stream parser 410.

In some demonstrative aspects, as shown in Fig. 4, UEM parsing scheme 400 may utilize at least one segment parser 412, which may be configured to assign the first and second sequences of encoded bit blocks to two frequency sub-blocks, e.g., including a first frequency sub-block, e.g., a first 80MHz frequency sub-block (frequency sub-block 0) and a second frequency sub-block, e.g., a second 80MHz frequency sub-block (frequency sub-block 1), for the first and second spatial streams.

For example, segment parser 208 (Fig. 2) may include, operate as, perform a role of, and/or perform the functionality of, segment parser 412.

In some demonstrative aspects, as shown in Fig. 4, a number of assigned coded bits, e.g., in each bit assignment round, may be in the order of $m_{00} + m_{10}$ and $m_{01} + m_{11}$.

For example, as shown in Fig. 4, stream parser 410 may assign the bits of encoded data bits 403, e.g., in a round robin fashion or according to any other assignment scheme.

In some demonstrative aspects, as shown in Fig. 4, stream parser 410 may assign $m_{00} + m_{10}$ bits to spatial stream 404 (spatial stream 0), and $m_{01} + m_{11}$ bits to spatial stream 406 (spatial stream 1), for example, in a round robin fashion and/or in any other way.

For example, stream parser 410 may keep assigning coded bits 403 to spatial stream 404 and spatial stream 406, e.g., in a round robin fashion, for example, until all coded bits 403 have been assigned.

In some demonstrative aspects, segment parser 412 may perform parsing for coded bits assigned to the spatial streams, e.g., individually for coded bits assigned to each spatial stream.

In some demonstrative aspects, as shown in Fig. 4, segment parser 412 may assign coded bits of spatial stream $n$, wherein $n = 0,1$, to frequency sub-block 0 and frequency sub-block 1, e.g., in a round robin fashion, and/or in any other way.

For example, a number of bits assigned to the frequency sub-block 0 may be $m_{0n}$, and a number of bits assigned to the frequency sub-block 1 may be $m_{1n}$.

For example, segment parser 412 may keep assigning coded bits of spatial stream $n$ to the frequency sub-block 0 and to the frequency sub-block 1, e.g., in a round robin fashion, for example, until finishing bits assignments for all the coded bits.

For example, as shown in Fig. 4, segment parser 412 may assign $m_{00}$ coded bits of spatial stream 404 to a frequency sub-block 405 for spatial stream 404 (80MHz frequency sub-block 0 of spatial stream 0).

For example, as shown in Fig. 4, segment parser 412 may assign $m_{10}$ coded bits of spatial stream 404 to a frequency sub-block 407 for spatial stream 404 (80MHz frequency sub-block 1 of spatial stream 0).

For example, as shown in Fig. 4, segment parser 412 may assign $m_{01}$ coded bits of spatial stream 406 to a frequency sub-block 409 for spatial stream 406 (80MHz frequency sub-block 0 of spatial stream 1).

For example, as shown in Fig. 4, segment parser 412 may assign $m_{11}$ coded bits of spatial stream 406 to a frequency sub-block 411 for spatial stream 406 (80MHz frequency sub-block 0 of spatial stream 1).

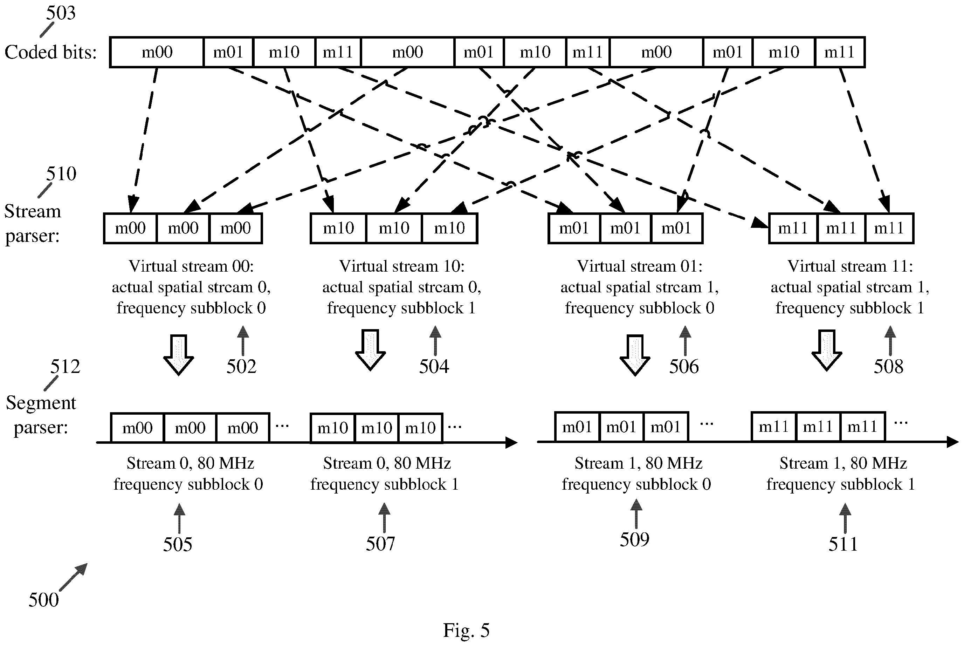

Reference is made to Fig. 5, which schematically illustrates a UEM parsing scheme 500, in accordance with some demonstrative aspects.

For example, UEM parsing scheme 500 may be configured to support stream parsing and/or segment parsing, for example, according to a UEM assignment, which includes an assignment of a plurality of MCSs to a plurality of frequency sub-blocks for one or more spatial streams. For example, transmitter circuitry 134 (Fig. 1) may be configured to parse a stream of encoded data bits based on one or more operations of UEM parsing scheme 500.

In some demonstrative aspects, UEM parsing scheme 500 may be implemented, e.g., by transmitter circuitry 134 (Fig. 1), to assign a stream of encoded data bits 503 to one or more sequences of encoded bit blocks for one or more spatial streams, for example, according to a joint segment-stream parsing scheme, e.g., as described below.

In some demonstrative aspects, as shown in Fig. 5, joint segment-stream parsing scheme may include assigning the stream of encoded data bits 503 to a stream of a plurality of stream-frequency segments, e.g., as described below.

In some demonstrative aspects, the plurality of stream-frequency segments may correspond to a respective plurality of different frequency sub-block/spatial stream combinations, e.g., as described below.

In some demonstrative aspects, UEM parsing scheme 500 may be implemented according to a definition of a virtual segment or sub-block, e.g., a "virtual stream", for a frequency sub-block, e.g., for each frequency sub-block, in a spatial stream, e.g., in each spatial stream.

For example, as shown in Fig. 5, UEM parsing scheme 300 may utilize a stream parser 510, which may be configured to assign the stream of encoded data bits 503 to four sequences of encoded bit blocks for four respective virtual streams.

For example, as shown in Fig. 5, the four virtual streams may correspond to four respective different frequency sub-block/spatial stream combinations of two spatial streams and two frequency sub-blocks.

For example, as shown in Fig. 5, the four virtual streams may include a spatial stream 502 (virtual stream 00) corresponding to a frequency sub-block/spatial stream combination of a first spatial stream (spatial stream 0) and a first frequency sub-block (frequency sub-block 0), a spatial stream 504 (virtual stream 10) corresponding to a frequency sub-block/spatial stream combination of a second spatial stream (spatial stream 1) and the first frequency sub-block (frequency sub-block 0), a spatial stream 506 (virtual stream 01) corresponding to a frequency sub-block/spatial stream combination of the first spatial stream (spatial stream 0) and a second frequency sub-block (frequency sub-block 1), and a spatial stream 508 (virtual steam 11) corresponding to a frequency sub-block/spatial stream combination of the second spatial stream (spatial stream 1) and the second frequency sub-block (frequency sub-block 1).

For example, stream parser 206 (Fig. 2) may include, operate as, perform a role of, and/or perform the functionality of, stream parser 510.

In some demonstrative aspects, transmitter circuitry 134 (Fig. 1) may include at least one segment parser 512, which may be configured to assign the four sequences of encoded bit blocks to the first frequency sub-block (frequency sub-block 0) and the second frequency sub-block (frequency sub-block 1), for the first and second spatial streams.

For example, segment parser 208 (Fig. 2) may include, operate as, perform a role of, and/or perform the functionality of, segment parser 512.

In some demonstrative aspects, as shown in Fig. 5, coded bits, e.g. all coded bits, in the stream of encoded data bits 503 may be divided into a plurality of bit blocks, e.g., including $L \times N_{SS}$ bit blocks. For example, a bit block, e.g., each bit block, of the $L \times N_{SS}$ bit blocks may include coded bits, e.g., all of the coded bits, which are assigned to spatial stream $n$ in frequency sub-block $l$.

In some demonstrative aspects, as shown in Fig. 5, the coded bits in the stream of encoded data bits 503 may be assigned to the virtual streams, for example, in the order of $m_{00}$, $m_{01}$, $m_{10}$, and $m_{11}$, for example, in a round robin fashion and/or in any other way.

For example, as shown in Fig. 5, stream parser 510 may assign, e.g., directly assign, $m_{ln}$ bits, wherein $l = 0,1$, $n = 0,1$, to a bit block of spatial stream $n$ and frequency sub-block $l$.

Referring back to Fig. 1, in some demonstrative aspects, device 102, device 140, and/or device 160 may utilize stream parsers and/or segment parsers, which may be configured to support unequal MCSs utilized in spatial streams and/or frequency sub-blocks, e.g., as described above.

In some demonstrative aspects, a number of bits in a bit assignment round, e.g., in each bit assignment round, may be varied and/or adjusted, for example, based on modulation orders, e.g., QAM types, applied in different spatial streams and/or on different frequency sub-blocks, e.g., as described above.

For example, the number of bits in a bit assignment round, e.g., in each bit assignment round, may be based on the value of $m_{ln}$, $l = 0,1 \cdots \cdots L - 1$, $n = 0,1, \cdots \cdots N_{SS} - 1$, which may represent the number of bits assigned to the spatial stream $n$ on frequency sub-block $l$ in each bit assignment. For example, the value of $m_{ln}$ may be determined by a modulation order applied in spatial stream $n$ on frequency subblock $l$, e.g., as described above.

For example, transmitter circuitry 134 may utilize a stream parser, e.g., stream parser 206 (Fig. 2), which may be, e.g., should be, aware of segment parser parameters, e.g., in accordance with Table 1.

For example, transmitter circuitry 134 may utilize the stream parser, e.g., stream parser 206 (Fig. 2) to make bit assignments, for example, based on the segment parser parameters, e.g., as described above.

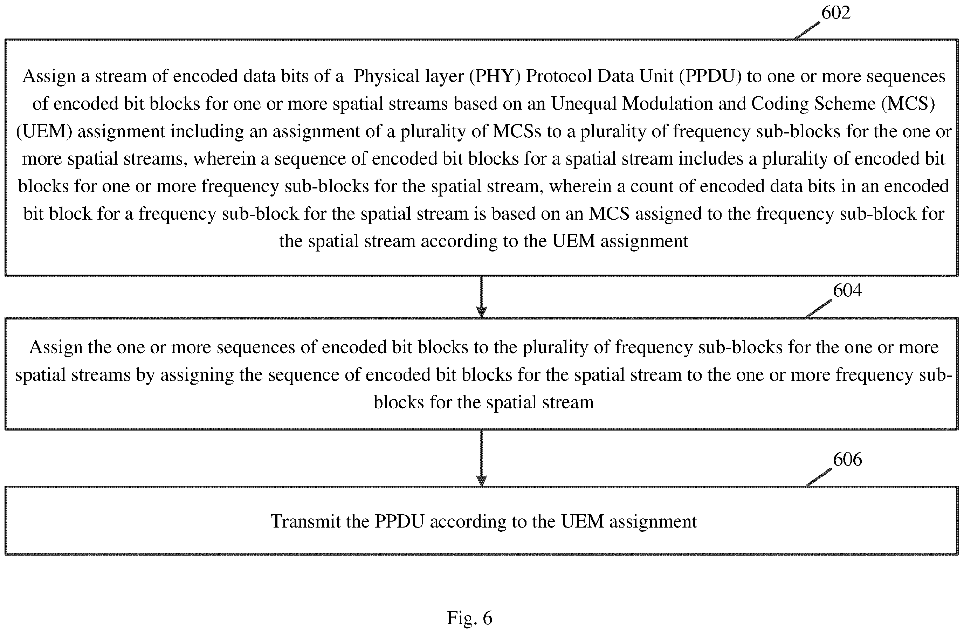

Reference is made to Fig. 6, which schematically illustrates a method of communicating a PPDU according to a UEM assignment, in accordance with some demonstrative aspects. For example, one or more of the operations of the method of Fig. 6 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 602, the method may include assigning a stream of encoded data bits of a PPDU to one or more sequences of encoded bit blocks for one or more spatial streams based on a UEM assignment. For example, the UEM assignment may include an assignment of a plurality of MCSs to a plurality of frequency sub-blocks for the one or more spatial streams. For example, a sequence of encoded bit blocks for a spatial stream may include a plurality of encoded bit blocks for one or more frequency sub-blocks for the spatial stream. For example, a count of encoded data bits in an encoded bit block for a frequency sub-block for the spatial stream may be based on an MCS assigned to the frequency sub-block for the spatial stream according to the UEM assignment. For example, transmitter circuitry 134 (Fig. 1) may be configured to assign the stream of encoded data bits of the PPDU to one or more sequences of encoded bit blocks for the one or more spatial streams based on the UEM assignment, e.g., as described above.

As indicated at block 604, the method may include assigning the one or more sequences of encoded bit blocks to the plurality of frequency sub-blocks for the one or more spatial streams, for example, by assigning the sequence of encoded bit blocks for the spatial stream to the one or more frequency sub-blocks for the spatial stream. For example, transmitter circuitry 134 (Fig. 1) may be configured to assign the one or more sequences of encoded bit blocks to the plurality of frequency sub-blocks for the one or more spatial streams by assigning the sequence of encoded bit blocks for the spatial stream to the one or more frequency sub-blocks for the spatial stream, e.g., as described above.

As indicated at block 606, the method may include transmitting the PPDU according to the UEM assignment. For example, transmitter circuitry 134 (Fig. 1) may be configured transmit the PPDU according to the UEM assignment, e.g., as described above.

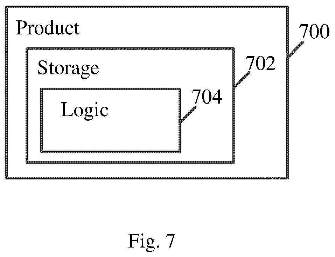

Reference is made to Fig. 7, which schematically illustrates a product of manufacture 700, in accordance with some demonstrative aspects. Product 700 may include one or more tangible computer-readable ("machine-readable") non-transitory storage media 702, which may include computer-executable instructions, e.g., implemented by logic 704, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, and/or 6, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 700 and/or machine readable storage media 702 may include one or more types of computer-readable storage media capable of storing data, including volatile memory, non-volatile memory, removable or non-removable memory, erasable or non-erasable memory, writeable or re-writeable memory, and the like. For example, machine readable storage media 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

## EXAMPLES

The following examples pertain to further aspects.

Example 1 includes an apparatus comprising transmitter circuitry configured to transmit a Physical layer (PHY) Protocol Data Unit (PPDU) according to an Unequal Modulation and Coding Scheme (MCS) (UEM) assignment comprising an assignment of a plurality of MCSs to a plurality of frequency sub-blocks for one or more spatial streams, the transmitter circuitry configured to assign a stream of encoded data bits of the PPDU to one or more sequences of encoded bit blocks for the one or more spatial streams based on the UEM assignment, wherein a sequence of encoded bit blocks for a spatial stream comprises a plurality of encoded bit blocks for one or more frequency sub-blocks for the spatial stream, wherein a count of encoded data bits in an encoded bit block for a frequency sub-block for the spatial stream is based on an MCS assigned to the frequency sub-block for the spatial stream according to the UEM assignment; and assign the one or more sequences of encoded bit blocks to the plurality of frequency sub-blocks for the one or more spatial streams by assigning the sequence of encoded bit blocks for the spatial stream to the one or more frequency sub-blocks for the spatial stream.

Example 2 includes the subject matter of Example 1, and optionally, wherein the transmitter circuitry is configured to assign a first count of encoded data bits to a first encoded bit block for a first frequency sub-block, and to assign a second count of encoded data bits to a second encoded bit block for a second frequency sub-block, wherein the first count of encoded data bits is based on a first MCS assigned to the first frequency sub-block, and the second count of encoded data bits is based on a second MCS assigned to the second frequency sub-block, wherein the first count of encoded data bits is different from the second count of encoded data bits, and the first MCS is different from the second MCS.

Example 3 includes the subject matter of Example 2, and optionally, wherein the first encoded bit block and the second encoded bit block are for a same spatial stream.

Example 4 includes the subject matter of Example 2, and optionally, wherein the first encoded bit block is for a first spatial stream, and the second encoded bit block is for a second spatial stream.

Example 5 includes the subject matter of any one of Examples 1-4, and optionally, wherein the count of encoded data bits in the encoded bit block for the frequency sub-block for the spatial stream is based on a modulation order of the MCS assigned to the frequency sub-block for the spatial stream.

Example 6 includes the subject matter of any one of Examples 1-5, and optionally, wherein the count of encoded data bits in the encoded bit block for the frequency sub-block for the spatial stream is based on a modulation-based parameter:

$$s_{ln} = \max\left(1, \frac{log_2(M_{ln})}{2}\right)$$

wherein $s_{ln}$ denotes the modulation-based parameter for an *l-th* frequency sub-block for an *n-th* spatial stream, wherein $M_{ln}$ denotes a modulation order of the MCS assigned to the *l-th* frequency sub-block for the *n-th* spatial stream, wherein $l = 0,1, \cdots \cdots L$ - 1, and $n = 0,1, \cdots \cdots N_{SS}$ - 1, wherein $L$ denotes a count of frequency sub-blocks in the plurality of frequency sub-blocks, and $Nss$ denotes a count of spatial streams in the one or more spatial streams.

Example 7 includes the subject matter of Example 6, and optionally, wherein the count of encoded data bits in the encoded bit block for the frequency sub-block for the spatial stream is:

$$m_{ln} = A_{ln} \cdot s_{ln}$$

wherein $m_{ln}$ denotes the count of encoded data bits in the encoded bit block for the *l-th* frequency sub-block for the *n-th* spatial stream, and wherein $A_{ln}$ denotes a parameter based on a count of allocated subcarriers in the *l-th* frequency sub-block for the *n-th* spatial stream.

Example 8 includes the subject matter of Example 7, and optionally, wherein the parameter $A_{ln}$ is a positive integer, which is based on a ratio between the count of allocated subcarriers in the *l-th* frequency sub-block for the *n-th* spatial stream and a minimal count of allocated subcarriers per frequency sub-block for the *n-th* spatial stream.

Example 9 includes the subject matter of any one of Examples 1-8, and optionally, wherein the transmitter circuitry is configured to assign the stream of encoded data bits to the one or more sequences of encoded bit blocks according to a sequence of bit assignments on a frequency sub-block basis, wherein a bit assignment corresponding to the frequency sub-block comprises one or more bit assignment rounds to assign encoded bit blocks for the frequency sub-block for all of the one or more spatial streams.

Example 10 includes the subject matter of any one of Examples 1-8, and optionally, wherein the transmitter circuitry is configured to assign the stream of encoded data bits to the one or more sequences of encoded bit blocks according to a sequence of $L$ bit assignments, wherein an *l-th* bit assignment comprises a sequence of $Nss$ bit assignment rounds, wherein an *n-th* bit assignment round for an *l-th* bit assignment comprises an assignment of $m_{ln}$ encoded data bits to an encoded bit block for the *l-th* frequency sub-block for the *n-th* spatial stream, wherein $m_{ln}$ is based on an MCS assigned to the *l-th* frequency sub-block for the *n-th* spatial stream, wherein $l = 0,1, \cdots \cdots L$ - 1, and $n = 0,1, \cdots \cdots N_{SS}$ - 1, wherein $L$ denotes a count of frequency sub-blocks in the plurality of frequency sub-blocks, and $Nss$ denotes a count of spatial streams in the one or more spatial streams.

Example 11 includes the subject matter of any one of Examples 1-8, and optionally, wherein the transmitter circuitry is configured to assign the stream of encoded data bits to the one or more sequences of encoded bit blocks according to a sequence of bit assignment rounds on a spatial stream basis, wherein a bit assignment round corresponding to the spatial stream comprises an assignment of encoded data bits for encoded bit blocks for all frequency sub-blocks for the spatial stream.

Example 12 includes the subject matter of any one of Examples 1-8, and optionally, wherein the transmitter circuitry is configured to assign the stream of encoded data bits to the one or more sequences of encoded bit blocks according to a sequence of $Nss$ bit assignment rounds, wherein an *n-th* bit assignment round comprises an assignment of $\sum_{l=0}^{L} m_{ln}$ encoded data bits for the *n-th* spatial stream, wherein $m_{ln}$ is based on an MCS assigned to an *l-th* frequency sub-block for an *n-th* spatial stream, wherein $l = 0,1, \cdots \cdots L$ - 1, and $n = 0,1, \cdots \cdots N_{SS}$ - 1, wherein $L$ denotes a count of frequency sub-blocks in the plurality of frequency sub-blocks, and $Nss$ denotes a count of spatial streams in the one or more spatial streams.

Example 13 includes the subject matter of any one of Examples 1-8, and optionally, wherein the transmitter circuitry is configured to assign the stream of encoded data bits to the one or more sequences of encoded bit blocks according to a joint segment-stream parsing scheme by assigning the stream of encoded data bits to a stream of a plurality of stream-frequency segments, wherein the plurality of stream-frequency segments corresponds to a respective plurality of different frequency sub-block/spatial stream combinations.

# EP 4 518 207 A1

Example 14 includes the subject matter of any one of Examples 1-8, and optionally, wherein the transmitter circuitry is configured to assign the stream of encoded data bits to the one or more sequences of encoded bit blocks by assigning the stream of encoded data bits to a stream of $L \times N_{SS}$ stream-frequency segments in a respective sequence of $L \times N_{SS}$ bit assignment rounds, wherein an $n \times I$ - $th$ bit assignment round comprises an assignment of $m_{In}$ encoded data bits, wherein $m_{In}$ is based on an MCS assigned to an $I$-$th$ frequency sub-block for an $n$-$th$ spatial stream, wherein $I = 0,1, \cdots \cdots L$ - 1, and $n = 0,1, \cdots \cdots N_{SS}$ - 1, wherein denotes a count of frequency sub-blocks in the plurality of frequency sub-blocks, and $Nss$ denotes a count of spatial streams in the one or more spatial streams.

Example 15 includes the subject matter of any one of Examples 1-14, and optionally, wherein the transmitter circuitry is configured to generate an interleaved stream of encoded data bits by interleaving the stream of encoded data bits based on at least one of a count of frequency sub-blocks in the plurality of frequency sub-blocks, or a count of spatial streams in the one or more spatial streams, wherein the transmitter circuitry is configured to assign the interleaved stream of encoded data bits to the one or more sequences of encoded bit blocks for the one or more spatial streams based on the UEM assignment.

Example 16 includes the subject matter of any one of Examples 1-15, and optionally, wherein the transmitter circuitry comprises a stream parser to assign the stream of encoded data bits to the one or more sequences of encoded bit blocks for the one or more spatial streams based on the UEM assignment, and a segment parser to assign the one or more sequences of encoded bit blocks to the plurality of frequency sub-blocks for the one or more spatial streams.

Example 17 includes the subject matter of any one of Examples 1-16, and optionally, wherein the transmitter circuitry is configured to assign the stream of encoded data bits to the one or more sequences of encoded bit blocks according to a round-robin assignment.

Example 18 includes the subject matter of any one of Examples 1-17, and optionally, wherein the transmitter circuitry is configured to assign the sequence of encoded bit blocks for the spatial stream to the one or more frequency sub-blocks for the spatial stream according to a round-robin assignment.

Example 19 includes the subject matter of any one of Examples 1-18, and optionally, wherein the frequency sub-block comprises an 80 Megahertz (MHz) frequency sub-block.

Example 20 includes the subject matter of any one of Examples 1-19, and optionally, wherein the UEM assignment comprises a first MCS assigned to a first frequency sub-block/spatial stream combination, and a second MCS, different from the first MCS, assigned to a second frequency sub-block/spatial stream combination.

Example 21 includes the subject matter of any one of Examples 1-20, and optionally, comprising one or more antennas connected to the transmitter circuitry.

Example 22 includes the subject matter of Example 21, and optionally, comprising a processor to execute instructions of an operating system, and a memory to store the instructions of the operating system.

Example 23 comprises a wireless communication device comprising the apparatus of any of Examples 1-22.

Example 24 comprises a mobile device comprising the apparatus of any of Examples 1-22.

Example 25 comprises an apparatus comprising means for executing any of the described operations of any of Examples 1-22.

Example 26 comprises a product comprising one or more tangible computer-readable non-transitory storage media comprising instructions operable to, when executed by at least one processor, enable the at least one processor to cause a wireless communication device to perform any of the described operations of any of Examples 1-22.

Example 27 comprises an apparatus comprising: a memory interface; and processing circuitry configured to: perform any of the described operations of any of Examples 1-22.

Example 28 comprises a method comprising any of the described operations of any of Examples 1-22.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. An apparatus comprising:
   transmitter circuitry configured to transmit a Physical layer (PHY) Protocol Data Unit (PPDU) according to an Unequal Modulation and Coding Scheme (MCS) (UEM) assignment comprising an assignment of a plurality of MCSs to a plurality of frequency sub-blocks for one or more spatial streams, the transmitter circuitry configured to:

   assign a stream of encoded data bits of the PPDU to one or more sequences of encoded bit blocks for the one or more spatial streams based on the UEM assignment, wherein a sequence of encoded bit blocks for a spatial stream comprises a plurality of encoded bit blocks for one or more frequency sub-blocks for the spatial stream, wherein a count of encoded data bits in an encoded bit block for a frequency sub-block for the spatial stream is based on an MCS assigned to the frequency sub-block for the spatial stream according to the UEM assignment; and

assign the one or more sequences of encoded bit blocks to the plurality of frequency sub-blocks for the one or more spatial streams by assigning the sequence of encoded bit blocks for the spatial stream to the one or more frequency sub-blocks for the spatial stream.

2. The apparatus of claim 1, wherein the transmitter circuitry is configured to assign a first count of encoded data bits to a first encoded bit block for a first frequency sub-block, and to assign a second count of encoded data bits to a second encoded bit block for a second frequency sub-block, wherein the first count of encoded data bits is based on a first MCS assigned to the first frequency sub-block, and the second count of encoded data bits is based on a second MCS assigned to the second frequency sub-block, wherein the first count of encoded data bits is different from the second count of encoded data bits, and the first MCS is different from the second MCS.

3. The apparatus of claim 1 or 2, wherein the count of encoded data bits in the encoded bit block for the frequency sub-block for the spatial stream is based on a modulation order of the MCS assigned to the frequency sub-block for the spatial stream.

4. The apparatus of any one of claims 1-3, wherein the count of encoded data bits in the encoded bit block for the frequency sub-block for the spatial stream is based on a modulation-based parameter:

$$s_{ln} = \max\left(1, \frac{log_2(M_{ln})}{2}\right)$$

wherein $s_{ln}$ denotes the modulation-based parameter for an *l-th* frequency sub-block for an *n-th* spatial stream, wherein $M_{ln}$ denotes a modulation order of the MCS assigned to the *l-th* frequency sub-block for the *n-th* spatial stream, wherein $l = 0, 1, \cdots \cdots L - 1$, and $n = 0, 1, \cdots \cdots N_{SS} - 1$, wherein $L$ denotes a count of frequency sub-blocks in the plurality of frequency sub-blocks, and $Nss$ denotes a count of spatial streams in the one or more spatial streams.

5. The apparatus of any one of claims 1-4, wherein the count of encoded data bits in the encoded bit block for the frequency sub-block for the spatial stream is:

$$m_{ln} = A_{ln} \cdot s_{ln}$$

wherein $m_{ln}$ denotes the count of encoded data bits in the encoded bit block for the *l-th* frequency sub-block for the *n-th* spatial stream, and wherein $A_{ln}$ denotes a parameter based on a count of allocated subcarriers in the *l-th* frequency sub-block for the *n-th* spatial stream.

6. The apparatus of claim 5, wherein the parameter $A_{ln}$ is a positive integer, which is based on a ratio between the count of allocated subcarriers in the *l-th* frequency sub-block for the *n-th* spatial stream and a minimal count of allocated subcarriers per frequency sub-block for the *n-th* spatial stream.

7. The apparatus of any one of claims 1-6, wherein the transmitter circuitry is configured to assign the stream of encoded data bits to the one or more sequences of encoded bit blocks according to a sequence of bit assignments on a frequency sub-block basis, wherein a bit assignment corresponding to the frequency sub-block comprises one or more bit assignment rounds to assign encoded bit blocks for the frequency sub-block for all of the one or more spatial streams.

8. The apparatus of any one of claims 1-6, wherein the transmitter circuitry is configured to assign the stream of encoded data bits to the one or more sequences of encoded bit blocks according to a sequence of $L$ bit assignments, wherein an *l-th* bit assignment comprises a sequence of $Nss$ bit assignment rounds, wherein an *n-th* bit assignment round for an *l-th* bit assignment comprises an assignment of $m_{ln}$ encoded data bits to an encoded bit block for the *l-th* frequency sub-block for the *n-th* spatial stream, wherein $m_{ln}$ is based on an MCS assigned to the *l-th* frequency sub-block for the *n-th* spatial stream, wherein $l = 0, 1, \cdots \cdots L - 1$, and $n = 0, 1, \cdots \cdots N_{SS} - 1$, wherein $L$ denotes a count of frequency sub-blocks in the plurality of frequency sub-blocks, and $Nss$ denotes a count of spatial streams in the one or more spatial streams.

9.  The apparatus of any one of claims 1-6, wherein the transmitter circuitry is configured to assign the stream of encoded data bits to the one or more sequences of encoded bit blocks according to a sequence of bit assignment rounds on a spatial stream basis, wherein a bit assignment round corresponding to the spatial stream comprises an assignment of encoded data bits for encoded bit blocks for all frequency sub-blocks for the spatial stream.

10. The apparatus of any one of claims 1-6, wherein the transmitter circuitry is configured to assign the stream of encoded data bits to the one or more sequences of encoded bit blocks according to a sequence of $Nss$ bit assignment rounds, wherein an $n$-th bit assignment round comprises an assignment of $\sum_{l=0}^{L} m_{ln}$ encoded data bits for the $n$-th spatial stream, wherein $m_{ln}$ is based on an MCS assigned to an $l$-th frequency sub-block for an $n$-th spatial stream, wherein $l = 0, 1, \cdots \cdots L - 1$, and $n = 0, 1, \cdots \cdots N_{SS} - 1$, wherein $L$ denotes a count of frequency sub-blocks in the plurality of frequency sub-blocks, and $Nss$ denotes a count of spatial streams in the one or more spatial streams.

11. The apparatus of any one of claims 1-6, wherein the transmitter circuitry is configured to assign the stream of encoded data bits to the one or more sequences of encoded bit blocks according to a joint segment-stream parsing scheme by assigning the stream of encoded data bits to a stream of a plurality of stream-frequency segments, wherein the plurality of stream-frequency segments corresponds to a respective plurality of different frequency sub-block/spatial stream combinations.

12. The apparatus of any one of claims 1-6, wherein the transmitter circuitry is configured to assign the stream of encoded data bits to the one or more sequences of encoded bit blocks by assigning the stream of encoded data bits to a stream of $L \times N_{SS}$ stream-frequency segments in a respective sequence of $L \times N_{SS}$ bit assignment rounds, wherein an $n \times l$-th bit assignment round comprises an assignment of $m_{ln}$ encoded data bits, wherein $m_{ln}$ is based on an MCS assigned to an $l$-th frequency sub-block for an $n$-th spatial stream, wherein $l = 0, 1, \cdots \cdots L - 1$, and $n = 0, 1, \cdots \cdots N_{SS} - 1$, wherein $L$ denotes a count of frequency sub-blocks in the plurality of frequency sub-blocks, and $Nss$ denotes a count of spatial streams in the one or more spatial streams.

13. The apparatus of any one of claims 1-12, wherein the transmitter circuitry is configured to generate an interleaved stream of encoded data bits by interleaving the stream of encoded data bits based on at least one of a count of frequency sub-blocks in the plurality of frequency sub-blocks, or a count of spatial streams in the one or more spatial streams, wherein the transmitter circuitry is configured to assign the interleaved stream of encoded data bits to the one or more sequences of encoded bit blocks for the one or more spatial streams based on the UEM assignment.

14. The apparatus of any one of claims 1-13, wherein the transmitter circuitry comprises a stream parser to assign the stream of encoded data bits to the one or more sequences of encoded bit blocks for the one or more spatial streams based on the UEM assignment, and a segment parser to assign the one or more sequences of encoded bit blocks to the plurality of frequency sub-blocks for the one or more spatial streams.

15. The apparatus of any one of claims 1-14 comprising one or more antennas connected to the transmitter circuitry, a processor to execute instructions of an operating system, and a memory to store the instructions of the operating system.

Fig. 1

EP 4 518 207 A1

Data bits 201

LDPC Encoder 202

Post-FEC PHY
Padding 204

Coded bits 203

Stream Parser 206

207

Segment
Parser for
SS_Nss

··· ···

Segment
Parser for
SS_1

Segment
Parser for
SS_0 208

200

Fig. 2

303
Coded bits:

| m00 | m01 | m10 | m11 | m00 | m01 | m10 | m11 | m00 | m01 | m10 | m11 | ... ... |

310
Stream parser:

| m00 | m10 | m00 | m10 | m00 | m10 | ... ... | m01 | m11 | m01 | m11 | m01 | m11 | ... ... |

Spatial stream 0
304

Spatial stream 1
306

312
Segment parser:

| m00 | m00 | m00 | ... ... | m10 | m10 | m10 | ... ... |    | m01 | m01 | m01 | ... ... | m11 | m11 | m11 | ... ... |

80MHz frequency subblock 0     80MHz frequency subblock 1     Coded bits          80MHz frequency subblock 0     80MHz frequency subblock 1     Coded bits

305          307                              309          311

300

Fig. 3

403
Coded bits:

| m00+m10 | m01+m11 | m00+m10 | m01+m11 | m00+m10 | m01+m11 | ... ... |

410
Stream parser:

| m00 | m10 | m00 | m10 | m00 | m10 | ... ...

Spatial stream 0
404

| m01 | m11 | m01 | m11 | m01 | m11 | ... ...

Spatial stream 1
406

412
Segment parser:

| m00 | m00 | m00 | ... ... | m10 | m10 | m10 | ... ...    Coded bits

80MHz frequency subblock 0     80MHz frequency subblock 1

405                            407

| m01 | m01 | m01 | ... ... | m11 | m11 | m11 | ... ...    Coded bits

80MHz frequency subblock 0     80MHz frequency subblock 1

409                            411

400

Fig. 4

Fig. 5

EP 4 518 207 A1

Assign a stream of encoded data bits of a Physical layer (PHY) Protocol Data Unit (PPDU) to one or more sequences of encoded bit blocks for one or more spatial streams based on an Unequal Modulation and Coding Scheme (MCS) (UEM) assignment including an assignment of a plurality of MCSs to a plurality of frequency sub-blocks for the one or more spatial streams, wherein a sequence of encoded bit blocks for a spatial stream includes a plurality of encoded bit blocks for one or more frequency sub-blocks for the spatial stream, wherein a count of encoded data bits in an encoded bit block for a frequency sub-block for the spatial stream is based on an MCS assigned to the frequency sub-block for the spatial stream according to the UEM assignment

604

Assign the one or more sequences of encoded bit blocks to the plurality of frequency sub-blocks for the one or more spatial streams by assigning the sequence of encoded bit blocks for the spatial stream to the one or more frequency sub-blocks for the spatial stream

606

Transmit the PPDU according to the UEM assignment

Fig. 6

Fig. 7

Europäisches
Patentamt

European
Patent Office

Office européen
des brevets

## EUROPEAN SEARCH REPORT

**Application Number**

EP 24 18 3926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 152 710 A1 (HUAWEI TECH CO LTD [CN]) 22 March 2023 (2023-03-22) * abstract * * page 8, paragraph 49 - page 12, paragraph 71 * * page 20, paragraph 139 * | 1-15 | INV. H04L1/00 |
| X | EP 3 869 724 A1 (INTEL CORP [US]) 25 August 2021 (2021-08-25) * abstract * * page 2, paragraph 7 - page 7, paragraph 29 * | 1-15 | |
| A | US 2019/238195 A1 (LIU JIANHAN [US] ET AL) 1 August 2019 (2019-08-01) * abstract * * page 1, paragraph 6 - page 2, paragraph 13 * | 1-15 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| Munich | 6 December 2024 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

3

## ANNEX TO THE EUROPEAN SEARCH REPORT
## ON EUROPEAN PATENT APPLICATION NO.

EP 24 18 3926

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | | Publication date | Patent family member(s) | | Publication date |
|---|---|---|---|---|---|
| EP 4152710 | A1 | 22-03-2023 | CN | 113765525 A | 07-12-2021 |
| | | | EP | 4152710 A1 | 22-03-2023 |
| | | | WO | 2021244497 A1 | 09-12-2021 |
| EP 3869724 | A1 | 25-08-2021 | NONE | | |
| US 2019238195 | A1 | 01-08-2019 | CN | 110352589 A | 18-10-2019 |
| | | | EP | 3685566 A1 | 29-07-2020 |
| | | | TW | 201935898 A | 01-09-2019 |
| | | | US | 2019238195 A1 | 01-08-2019 |
| | | | WO | 2019149272 A1 | 08-08-2019 |

EPO FORM P0459

For more details about this annex : see Official Journal of the European Patent Office, No. 12/82